**Europäisches Patentamt**

**European Patent Office**

**Office européen des brevets**

(11) Publication number: **0 055 097**
**A1**

# EUROPEAN PATENT APPLICATION

(21) Application number: **81305955.7**

(22) Date of filing: **18.12.81**

(51) Int. Cl.³: **H 04 Q 7/04**

(30) Priority: **18.12.80 US 218168**

(71) Applicant: **GENERAL ELECTRIC COMPANY, 1 River Road, Schenectady New York 12305 (US)**

(43) Date of publication of application: **30.06.82 Bulletin 82/26**

(72) Inventor: **Leslie, Samuel Augustus, 505 Wellington Drive, Forest Virginia 24551 (US)**

(74) Representative: **Sanders, Peter Colin Christopher et al, BROOKES & MARTIN High Holborn House 52/54 High Holborn, London WC1V 6SE (GB)**

(84) Designated Contracting States: **DE FR GB SE**

(54) **Radio-telephone system.**

(57) A radio-telephone system and method of operation. A code indicating a channel next available for communication is modulated on a marker channel. Radio-telephones scan to detect the marker channel and decode the identity of the next available channel. This channel identification is stored in a memory associated with the radio-telephone. To place or receive a call, the radio-telephone consults its memory to determine the next available channel and then switches to that channel. The arrangement eliminates operational problems associated with "camping" on the wrong channel and the long channel scan times associated with known systems and methods.

RADIO-TELEPHONE SYSTEM

This invention relates in general to radio-telephone systems whereby a mobile radio-telephone user is placed in communication with a telephone subscriber. Communication is established through a central terminal which transmits to a mobile user via one of a plurality of dedicated radio communication channels, voice communication received from a telephone subscriber over a telephone line. The central terminal also receives via radio channel voice communication from the mobile user and relays it to the telephone line for transmittal to the telephone subscriber.

A basic radio-telephone scheme is set forth in detail in U.S. Patent 3,173,996 - Rypinski, Jr., issued March 16, 1965. The teachings of that patent are incorporated herein by reference.

The basic radio-telephone system set forth in the Rypinski, Jr. patent utilizes eight separate and distinct dedicated communication channels for transmitting and receiving information to and from mobile radio-telephone users. Thus, it is capable of simultaneously handling eight telephone conversations between mobile radio-telephone users and their respective telephone subscribers. Thus, when there are more than eight mobile radio-telephone users, they must share the eight available channels. When eight mobile radio-telephone users are in simultaneous communication over the eight available channels, a ninth mobile radio-telephone user will not have a free channel available for a call and must wait for a communication channel to become free. Therefore, a system for signaling the busy and free status of the eight dedicated communication channels was necessary.

An arrangement and method of operation were adopted allowing a plurality of mobile radio-telephone stations to automatically select a non-busy communication channel for initiating or receiving a telephone call. In accordance with the method adopted, a marker is transmitted on a free communication channel in order to designate it as the next communication channel that is available for communication.

A land-based terminal includes means for identifying a particular one of the communication channels as the next available channel and transmitting a marker signal thereon to designate it as such. Each of the mobile radio-telephone stations includes a channel selector which sequentially scans the channels in search of the marker signal. The channel selector within the mobile radio-telephone stops scanning when it detects the marker signal and "camps" on the identified channel. When a telephone call is originated by a telephone subscriber intended for a particular mobile radio-telephone, the address of the call receiving mobile radio-telephone is transmitted on the marked channel. A telephone conversation will then take place between the telephone subscriber initiating the call and the mobile radio-telephone receiving the call. The terminal then marks a new next available channel and transmits a marker signal thereon to designate that channel as the one next available for communication. The mobile radio-telephones, not engaged in communication, again search for the next available channel by scanning all of the channels until the marker signal is detected. Upon detecting the marker signal, the mobile radio-telephones stop scanning and camp on the newly marked channel.

This marking arrangement also works for calls originated by a mobile radio-telephone. All mobile radio-telephones, not otherwise engaged in communication, are camped on the next available channel for communication. When one of them wants to initiate a call, it transmits the appropriate call initiating signal on the marked channel and communication proceeds on that channel. The terminal then selects a new next available channel and moves the marker signal to that new channel. The remaining mobile radio-telephones then scan until they detect the new marker signal and camp on the next available channel.

The specific details of addressing and signaling including the exchange of signals, between the terminal and a mobile radio-telephone, for dedicating a particular communication channel to a specific mobile radio-telephone will not be described. These details can all be obtained from the Rypinski, Jr. patent cited above.

The above-described known radio-telephone system functioned adequately when there were a few radio-telephone subscribers and few communication channels within the systems. However, as populations became more dense and the number of radio-telephone subscribers and communication channels increased, difficulties began to develop in the operation of radio-telephone systems.

Each communication channel includes a band of operating frequencies, the bandwidth, frquency range, and channel spacing of which regulated by a government agency. For each communication channel, the terminal includes a transmitter, receiver, and antenna system operable on that channel. When a plurality of such transmitters, receivers, and antennas are located near to one another, a certain amount of radio frequency (RF) energy from a first transmitter and antenna, operating on a first channel, is coupled to a second transmitter and antenna operating on a second channel. This energy mixes with the signals generated by the second transmitter to form various signals on sum and difference frequencies known as intermodulation (IM) products. When RF energy on the marked channel, containing marker signal modulation mixes with the signals generated on an unmarked channel to form IM products, the IM products may contain marker signal modulation. In addition to the basic sum and difference IM products, harmonics of the various sum and difference combinations are also generated. The result is a plurality of spurious signals many of which contain marker signal modulation information.

With increasing numbers of channels dedicated for radio-telephone communication, the number of such spurious signals multiplies and it becomes more and more likely that such spurious signals fall in or adjacent to dedicated communication channels or are within the lock range of the channel scanner of a mobile radio-telephone. As a result, there is an increase in ambiguity in seizing and locking onto the communication channel intended for next communication. A mobile radio-telephone may seize and lock onto a channel having only a spurious IM product containing marker signal modulation thereon. Attempted communication on such an improperly "seized" channel will not result in a communication link being established and the mobile radio-telephone must abort its attempted call and re-scan the channels to locate the marked next available channel. This results in a substantial amount of lost time.

Similarly, when a call is originated by a telephone subscriber for a specific mobile radio-telephone, the intended radio-telephone recipient of the call may be camped on the wrong channel as a result of a spurious IM product containing marker signal modulation. Much time is wasted in establishing communication with the intended radio-telephone. The IM product problem becomes extensive for large international systems wherein many equally-spaced channels may be employed. In addition to the problem of "locking" onto an IM (spurious) channel marker, the problem of search time, i.e. the time for scanning to locate the next available channel, becomes extensive when a large number of channels must be scanned each time a new marker channel is designated by the terminal. In essence, the terminal must wait the amount of time that it takes a mobile radio-telephone to scan a large number of channels before it can place a new land-to-mobile call. Time must be allocated for all scanning to be completed before a mobile-to-land (mobile-to-terminal) call can be placed. These scanning times subtract from the maximum number of calls that can be placed from telephone subscribers to mobile radio-telephones.

In order to minimize the IM product problem, some systems transmit a reduced carrier power signal on channels currently unused for communication to "mask" any IM products that may have been generated within the channel. This technique is also known as the "$F_O$" technique. Usually, power levels in excess of one (1) watt are necessary for $F_O$ operation. Of course, the power level required for $F_O$ operation depends upon the amount of isolation available through circulators present in the antenna combiner associated with the terminal.

Even though somewhat effective, the use of $F_O$ operation generates additional IM products outside of the communication channels on a continuous basis. This may cause interference with other radio services. In addition, standby or $F_O$ power levels may have to be raised (to much more than 1 watt) when large numbers of channels are used or when design short cuts have been taken in the antenna combining apparatus resulting in a substantial amount of dissipated power at the terminal. Thus, $F_O$ or reduced carrier power operation does not completely overcome the difficulties associated with the operation of mobile radio-telephone systems having a large number of channels.

Another scheme that has been attempted to overcome the IM product utilizes a logic circuit within a mobile radio-telephone. The logic circuit matches a channel number encoded on the channel with the channel to which the mobile radio-telephone is tuned. Problems arise with this approach, however, in that the length of time required to search all of the channels is lengthened considerably. This is because a longer look on each channel is required in order to distinguish between a valid channel number and other signals such as dialing signals, hand-shaking tones, or voice signals. Also, it is difficult for logic within the mobile radio-telephone to distinguish between a valid channel number modulation and a "seize" tone response when it attempts to place a mobile-to-terminal call. Thus, this approach is also inadequate.

Yet another approach to overcoming the operational difficulties caused by IM products is to use channel, guard tones to indicate whether a mobile radio-telephone is tuned to the correct channel. Such a system works adequately where the system includes only a small number of channels. However, this approach fails when approximately sixteen (16) or more channels are in the system. This failure results from the considerably longer channel scan time required to decode a channel guard tone. This seriously limits the call throughput capability of a large system. Another difficulty attendant the channel guard tone approach is that the number of guard frequencies required is equal to half the number of channels operable within the system. This number of guard frequencies results from the requirement of preventing IM products from appearing on any "inband" channel. Thus, as an example, a 32 channel system would require 16 different channel guard frequencies.

Another scheme for overcoming the IM product problem would be to utilize different marker channel tones for each channel. This approach is relatively simple in that a mobile radio-telephone would automatically set its tone detector to look at the marker tone associated with the channel to which the mobile is tuned, regardless of which channel that happens to be. However, N/2 different marker frequencies for an

N-channel system would be required. The required tone separation between markers and the possibility of interfering with some of the other call processing tones renders this approach quite cumbersome.

For radio-telephone systems operating in the United States, the Bell System specifies that a mobile radio-telephone must remain on each channel for 250 milliseconds before it steps to the next channel during the marker search process. Thus, over 8 seconds are required for one complete scan in a 32 channel system. This time span is excessive because it detracts considerably from the call throughput rate for calls initiated from a telephone subscriber intended for a mobile radio-telephone. For international systems, the detection algorithm is slightly changed from the U.S. system. In the international system, a mobile radio-telephone steps to the next channel as soon as it determines that the marker signal is not present to the channel to which it is tuned. This type of scanning generally takes 50-80 milliseconds where only unsquelched voice is present on a channel (20 milliseconds synthesized/oscillator switching time plus 30-50 milliseconds detection time). However, the presence of voice communication on a channel will likely stretch this time to 100-150 milliseconds (or longer) before the tone detector logic of the mobile radio-telephone can determine that it is extraneous information and not a marker tone. Fast scanning will reduce the time required for marker search by approximately 50%. However, the terminal must still wait 4-5 seconds to complete telephone subscriber initiated calls.

The object of the present invention is to provide a mobile radio-telephone arrangement that overcomes the operational disadvantages of the prior art systems. Namely, one which overcomes the IM product problem associated with known systems having a large number of channels, and which reduces the lengthy search time associated with such prior art systems.

In short, the basic concept of the present invention is that one of the communication channels is designated as a marker/control channel. On this channel, a signal identifying the next vacant channel is transmitted. The next vacant channel (as determined by the terminal) is encoded on the marker channel, and may be a two digit marker for systems with up to 99 channels. The terminal always assigns the next channel in some predetermined sequence or randomly until all channels become occupied with communication. When this occurs, the encoded channel number becomes the same as the marker channel and the marker channel is then used for the next communication.

In general, all mobile radio-telephones search for the marker channel. Once the marker channel is found, a mobile radio-telephone continues to monitor the marker channel regardless of which channel is identified as being next available for communication. The next available channel information is decoded and stored in a memory associated with the mobile radio-telephone. As the information related to the next available channel transmitted on the marker channel changes, the memory of each mobile radio-telephone is updated. Thus, the memory within each mobile radio-telephone contains the identity of the next available channel. When a mobile radio-telephone receives or initiates a call, it simply consults its memory and switches to the channel for next communication retrieved therefrom. This arrangement provides for considerable operational improvement.

On land originated calls, i.e. a telephone subscriber dials the telephone number of a mobile radio-telephone, the address (telephone number) of the mobile radio-telephone to which the call is directed is transmitted by the terminal following a transmission of the channel assignment number on the marker channel. The mobile radio-telephone that has been addressed detects and recognizes its address and switches to the designated channel number stored within its memory and answers the call by transmitting on the designated channel 750 milliseconds of guard tone (standard IMTS). The terminal receives the guard tone and in response generates a ring tone on the designated channel (for up to 60 seconds or so) or until the mobile radio-telephone answers the ring by transmitting 400 milliseconds of connect tone. The remainder of the mobile radio-telephones, which are monitoring the marker channel, remain on the marker channel. The terminal then changes the channel number designation on the marker channel to the next vacant channel immediately upon completion of the dialed address.

As long as channel number identification information is being transmitted on the marker channel, any mobile radio-telephone may attempt to place (originate) a call by going "off-hook". A mobile radio-telephone originating a call consults its memory and automatically switches to the channel designated as the next available channel. This switching occurs within a prede fined  time window (typically 250 milliseconds following the end of a channel identification word on the marker channel). The mobile radio-telephone originating a call, after switching to the next available channel, transmits a guard tone on that next available channel for 350 milliseconds. Following the transmission of this guard tone, the mobile radio-telephone transmits 50 milliseconds of a connect tone and then more guard tone. The terminal, upon receiving these signals transmitted by the call originating radio-telephone, transmits a seize tone at a predetermined time interval. This seize tone, in effect, signals the mobile radio-telephone that it has seized the next available channel. After an indication of seizure, the mobile radio-telephone originating a call sends its ANI code on the seized channel. Upon receipt of a valid ANI code, the terminal transmits a dial tone on the channel. The mobile radio-telephone then transmits a dialed telephone number designating a land-based or another mobile radio-telephone subscriber to be contacted via the terminal.

The remainder of the mobile radio-telephones, not in communication, continue to monitor the marker channel. However, the terminal changes the encoded channel number immediately upon receiving a guard tone on the previously designated channel. Thus, without any scanning, the remaining mobile radio-telephones update their respective memories to identify the next available channel.

To further preclude the possibility of contention between mobile-to-terminal and terminal-to-mobile calls, a conflict resolution algorithm can be implemented. This algorithm requires the reception of two or three consecutive channel numbers before an attempt to originate a call can be implemented. The use of such an algorithm reduces the possibility that a radio-telephone may incorrectly interpret numbers contained within a land-to-mobile call sequence as being a channel number. As a further precuation, the terminal ignores any guard tone that may be received on the designated channel during the time it is transmitting the address information of a mobile radio-telephone.

The radio-telephone arrangement, provided by this invention, overcomes both the IM product and search time problems because a mobile radio-telephone can immediately switch to the next available channel designated by a signal on the marker channel when a call is to be originated or received. This immediate switching occurs even if the mobile radio-telephone was inadvertently camped on an "IM" marker channel. The next available channel to which a mobile radio-telephone switches is determined solely by the information stored within its memory. Thus, valuable time is not wasted in determining the next available channel when that information is needed. The optional use of the American Telephone & Telegraph IMTS algorithm provides a randomization of the mobile radio-telephones over a period less than the two or three channel number repeat period in their attempts to originate calls, thereby minimizing conflicts in call origination.

In a typical embodiment, twenty pulses per second (PPS) frequency shift key (FSK) signaling between a 2000 Hz mark tone (not to be confused with the "marker" channel) and an 1800 Hz space tone can be used for sending both channel number identification codes and the mobile NPA/address number to further speed up signal processing. Using the same signaling format as that used for dialing simplifies hardware implementation both in the radio-telephone and at the terminal.

In accordance with one aspect of the invention there is provided a method for establishing communication between a central terminal of a radio-telephone system and a mobile radio-telephone over one of a group of communications channels characterised in that:

the central terminal transmits a channel identification signal on one of the communication channels designated as a marker channel, the channel identification signal providing an identification of the next available channel as assigned by the central terminal for communication between a mobile radio-telephone station and the central terminal, and in that - the mobile radio-telephone station scans the communication channels to locate the marker channel by detecting the channel identification signal transmitted thereon and stores the identity of the next available channel as specified by the channel identification signal detected during the scanning step.

A system for implementing the above described method would establish communication between a central terminal of a radio-telephone system and a mobile radio-telephone station over one of a group of communication channels and comprise the following:

- means located at the central terminal for transmitting a channel identification signal on one of the communications channels designated as a marker channel, the channel identification signal providing an identification of the next available channel for communication as assigned by the central terminal for communication between a mobile radio-telephone station and the central terminal;

- means located at the mobile radio-telephone station for scanning the communication channels to locate the marker channel by detecting the channel identification signal transmitted thereon and for storing the identity of the next available channel as specified by the channel identification signal detected by the scanning means.

Specific signaling and tone examples for calls to and from mobile radio-telephone stations will be discussed in greater detail in the detailed description to follow.

By way of example only:

FIGURE 1 is a functional block diagram illustrating an embodiment of the present invention;

FIGURE 2 is a simplified functional block diagram of the relevant parts of a mobile radio-telephone;

FIGURE 3 is a graphical representation of the marker identification code format;

FIGURE 4 illustrates a typical land-to-mobile call sequence;

FIGURE 5 illustrates a typical mobile-to-land call sequence;

FIGURE 6 illustrates a typical land-to-mobile call sequence where the marker channel is the next available channel for communication; and

FIGURE 7 illustrates a typical mobile-to-land call sequence where the marker channel is the next available channel for communication.

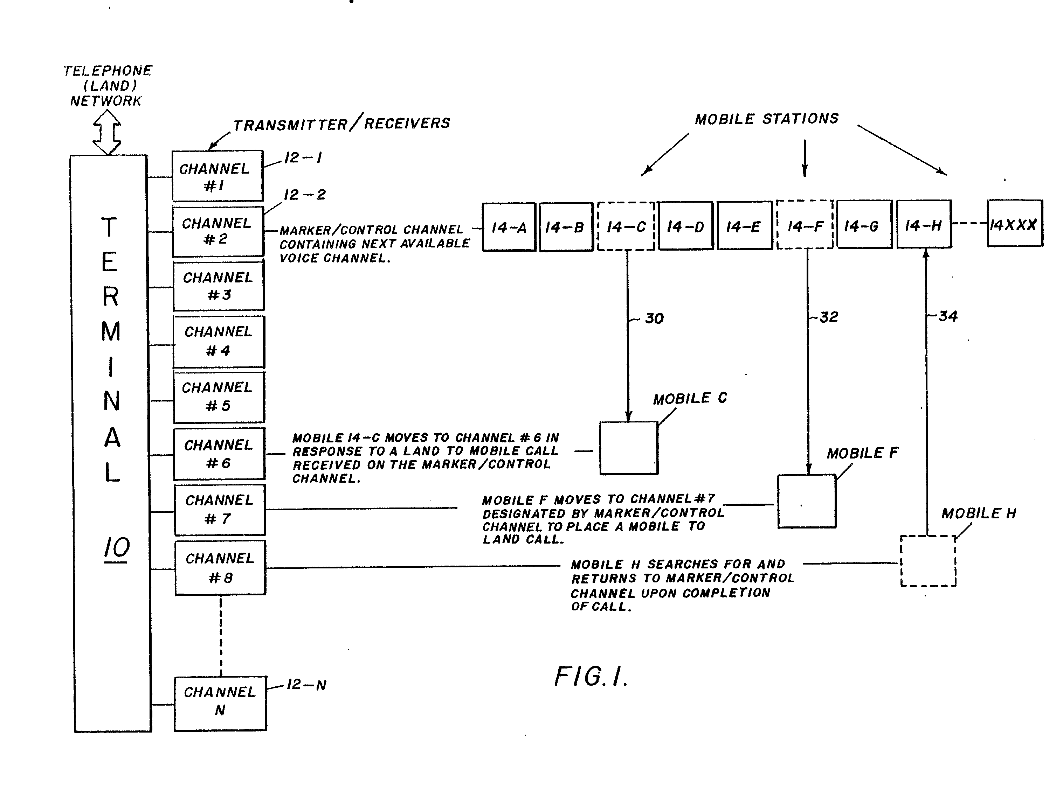

The radio-telephone system illustrated in Fig. 1 includes a terminal 10 permanently installed at a central control facility and coupled to a telephone network operated by a local telephone company. Associated with terminal 10 are a plurality of transmitters/receivers 12-1 ... 12-N operating respectively on predetermined communication channels 1...N. The radio-telephone system includes a plurality of mobile radio-telephones 14-A...14-XXX. The radio-telephone system is flexible to the extent that the number of channels can be increased or decreased by appropriate activation or deactivation of transmitters and receivers 12 and by the addition or deletion of mobile radio-telephone stations 14. The basic hardware is known and is illustrated by U.S. Patent 3,173,996 - Rypinski, Jr. (March 16, 1965). This patent is incorporated herein by reference. Based upon the description in the present patent, the hardware modifications necessary to the Rypinski, Jr. arrangement and the method of operation of the present invention should be clear to one of ordinary skill in the art.

The central concept of this invention is the use of one of the channels 1...N as a marker/control channel. The marker/control channel could be any one of the channels so designated.

On the marker channel, information as to the next available channel for communication is encoded, preferably as a two digit number. Of course, other types of coding could be used. As channels become utilised for communication, terminal 10 changes the next available channel in accordance with a predetermined sequence until all channels become occupied with in-process calls. This sequence could simply be a rotation of channel numbers or any other sequence including a random channel number assignment. When all channels, other than the marker channel, have become occupied with in-process calls, the encoded two digit number representing the next available channel becomes the same as the marker channel. In general, all mobile radio-telephones 14 search or scan for the marker channel. The marker channel is located by detecting the two digit code transmitted thereon. Once found, each mobile radio-telephone 14 continues to monitor the marker channel.

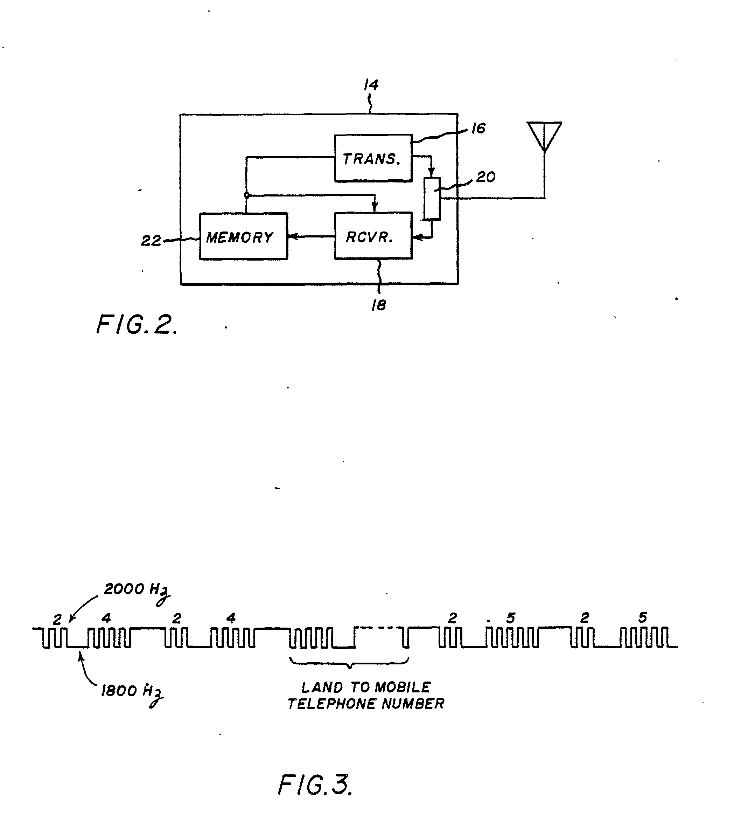

Referring now to Figure 2, there is shown a simplified block diagram of the relevant parts of a mobile radio-telephone 14. Mobile radio-telephone 14 includes a transmitter 16, a receiver 18, an antenna coupling system 20, and a memory 22. Receiver 18 scans the communication channels looking for the marker channel. Once the marker channel is located, the two digit number encoded thereon is detected by receiver 18. The information detected by receiver 18 is stored in memory 22. Memory 22 is preferably a random access memory (RAM) that can be written into and read from by appropriate command signals coupled thereto. Thus the marker information transmitted on the marker channel causes memory 22 to store a number representing the next available communication channel. The contents of memory 22 are updated in accordance with new information transmitted on the marker channel as necessary.

For a land-to-mobile call, ie a call placed by a land-based telephone subscriber or radio-telephone through terminal 10 to a radio-telephone subscriber, a telephone subscriber within the telephone network dials a telephone number specifying the address (telephone number) of a mobile radio telephone 14. This will generally be a three digit NPA code plus a four digit address. Terminal 10 causes the address of the specific mobile radio-telephone 14 to be transmitted by the transmitter/receiver 12 operating on the marker channel. The address information preferably follows a transmission of the two digit channel assignment number indicating the next available channel for communication. Of course, a scheme could be devised wherein the address information is transmitted with some other temporal relationship to the marker channel code and such other schemes are considered to be within the scope of the present invention. The mobile radio-telephone 14 to which the call was addressed, upon detecting its own address, immediately switches to the designated channel number encoded on the marker channel (as previously stored in its memory) and answers the call by transmitting 750 milliseconds of guard tone. It is assumed throughout this patent, that the various signals such as guard tones, ring tones etc., are those used in conventional radio-telephone systems. However, this choice is merely one of convention and is not intended to limit the scope of the present invention. The specific choice of signals utilised for guard tones, ring tones, and the like are unimportant to an understanding of the present invention. As long as the form of the signal is known and filters are appropriately designed for their detection, any specific type of signalling or signalling sequence could be utilised.

Terminal 10, via one of its transmitted receivers 12, operating on the "next available channel." receives the guard tone transmitted by the mobile radio-telephone 14 to which the call was addressed. Terminal 10, through the transmitter associated with the next available channel, then generates a ring tone on that channel for up to 60 seconds or so or until the addressed mobile radio-telephone 14 answers the ring signal by transmitting 400 milliseconds of a connect tone. This establishes communication between the addressed mobile radio-telephone 14 and terminal 10 via one of transmitter/receivers 12.

The remainder of the mobile radio-telephones 14 monitoring the marker channel remain on the marker channel. Terminal 10 selects a new next available channel number designation and transmits that information over the marker channel. All mobile radio-telephones 14, not otherwise engaged in communication, update their respective memories 22.

Figure 1 illustrates a specific example of how individual radio-telephones switch channels in response to commands from terminal 10. In this example, channel two (2) is designated as the marker/control channel. The marker on channel two (2) contains information as to the next available voice communication channel. In this example, it is assumed that the next available communication channel is channel six (6) and that a land-based telephone subscriber is placing a call; to mobile radio-telephone 14-C. Terminal 10 transmits the address of mobile radio-telephone 14-C on marker channel two (2) following the channel six (6) code transmitted on channel two (2). In response to detection of its address, mobile radio-telephone 14-C moves to channel six (6) which was the next available channel designated by the information coded on marker channel two (2). The movement of mobile radio-telephone 14-C to channel six (6) is signified by line 30.

It is also assumed that once channel six (6) is in use, the next available channel in a predetermined sequence of next available channels is channel seven (7). Therefore, the information for channel seven (7) is encoded and transmitted on marker channel two (2). All other mobile radio-telephones 14, tuned to the marker channel (channel 2) detect the information that the next available channel is now channel seven (7) and they update the information within their respective memories 22. Thus, each mobile radio-telephone 14 knows that if it next communicates that communication will take place on channel seven (7).

In the example illustrated in Figure 1, it is assumed that mobile radio-telephone 14-F places a call to a land-based telephone subscriber. The specific call signalling sequence will be described later in this patent. However, for the purposes of the simplified discussion shown in Figure 1, mobile radio-telephone 14-F moves to channel seven (7) as called for by its own memory 22. This movement is signified by line 32. Once on channel 7, mobile radio-telephone 14-F proceeds with the signalling sequence required for placing a call to a land-based telephone.

It is also assumed in the Figure 1 example that during the time that mobile radio-telephone 14-C is receiving its call on channel six (6) and mobile radio-telephone 14-F is placing its call on channel seven (7), that mobile radio-telephone 14-H was already engaged in communication on channel eight (8). When mobile radio-telephone 14-H completes its communication on channel eight (8), it returns to monitor the marker channel (channel 2). By detecting the information encoded on the marker/control channel, mobile radio-telephone 14-H updates its memory 22 to incorporate the identity of the next available communications channel (not shown in Figure 1). The movement of radio-telephone 14-H from channel eight (8) to marker two (2) is designated by line 34.

The procedure for placing mobile-to-land calls is as follows: As long as channel number information is being transmitted on the marker channel, any mobile radio-telephone 14 may attempt to place a call by going "off-hook". The mobile radio-telephone 14 placing a call automatically switches to the next available channel, as stored within its memory 22. This switching occurs within a predefined time "window". This window is typically 250 milliseconds following the ends of a channel description word. The mobile radio-telephone 14 then transmits a guard tone on that channel within 350 milliseconds, following the guard tone, it transmits 50 milliseconds of connect tone and then transmits more guard tone. Terminal 10, in response, transmits a seize tone at the proper interval to signal to the mobile radio-telephone 14 that is has seized the next available channel.

channel. After an indication of a seized channel the mobile radio-telephone 14 will then send its ANI code on the designated channel. In response to a valid ANI code, terminal 10 transmits a dial tone. Mobile radio-telephone 14 then transmits the dialled telephoned number upon receipt of the dial tone transmitted by the terminal 10.

The remainder of the mobile radio-telephones 14 not engaged in communication continue to monitor the marker channel. Terminal 10 assigns a new "next available channel" and changes the encoded channel number transmitted on the marker channel immediately upon receiving a guard tone on the previously designated next available channel.

To further preclude the possibility of contention between mobile-to-land and land-to-mobile calls, logic can be incorporated into the mobile radio-telephones 14 requiring that a mobile radio-telephone 14 receive and decode two or three consecutive channel numbers before attempting to originate a call. Such logic reduces the probability that a radio-telephone may incorrectly interpret channel marker numbers within a down link as being a channel number. As a further precaution, terminal 10 can be caused, by logic therein, to ignore any guard tone that is received on a designated channel during the time it is transmitting the address of a mobile radio-telephone 14.

To prevent simultaneous contention on mobile call origination, there is available an AT&T algorithm that can be used in the radio-telephone system. This algorithm requires the mobile radio-telephone to invoke a random time delay before a mobile-to-land call attempt is made. Using this algorithm, radio-telephones can be time randomised over a time period of less than the two or three channel number repeat periods, discussed above, in their attempts to originate calls.

The preferred embodiment utilises 20 pulses per second (PPS) frequency shift keying (FSK) signalling with 2000 Hz serving as the mark tone and 1800 Hz serving as a space tone. These tones can be used for sending both the channel number and the mobile NPA/address number to further speed up the signalling process. Using the same signalling format as is used for dialling simplifies hardware in both the mobile radio-telephones 14 and terminal 10. An example of the marker format is shown in Figure 3.

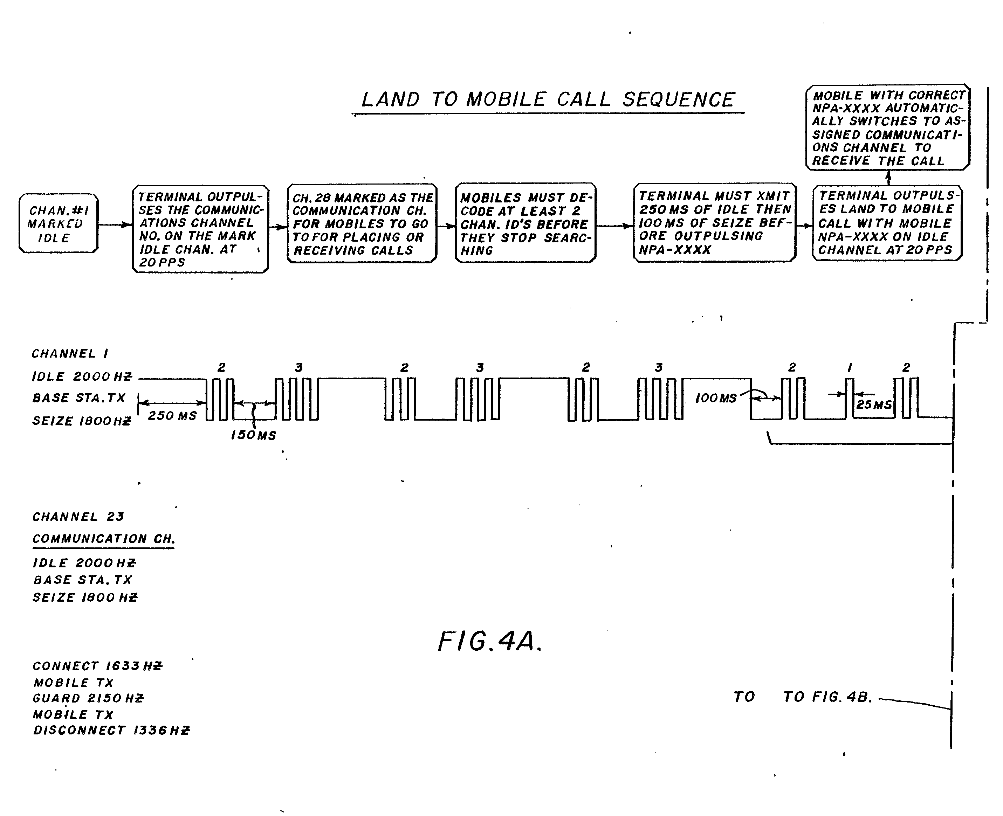

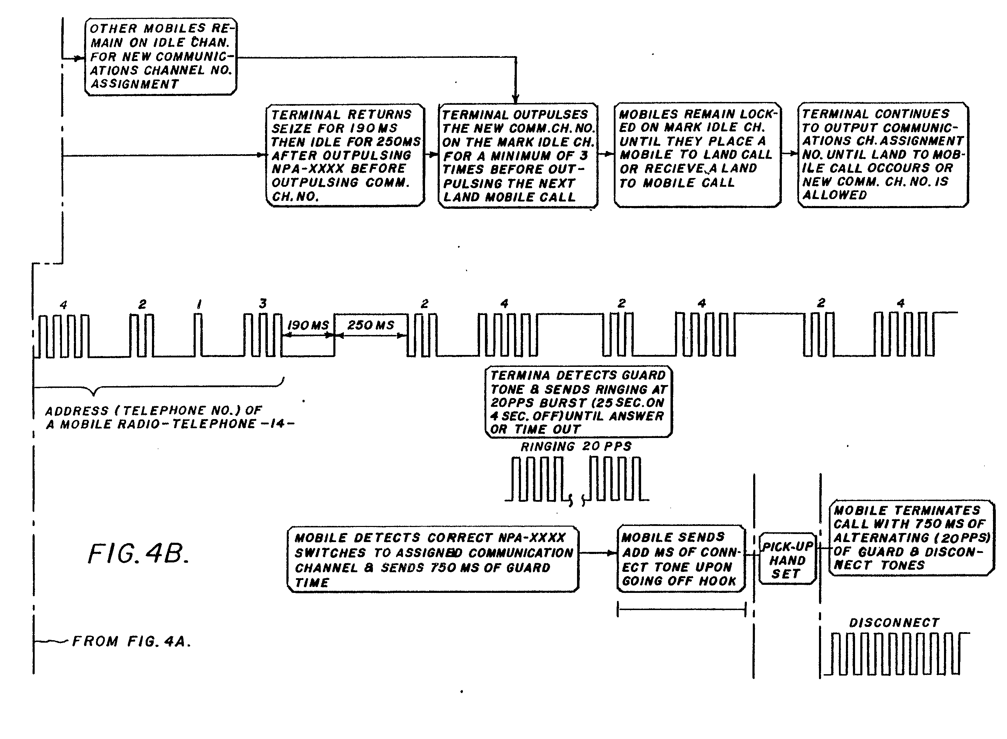

Referring now to Figure 3 there is shown a graphic representation of the marker identification code format. As previously stated, signals are transmitted by a frequency shift key (FSK) modulating scheme using a mark tone of 2000 Hz and a space tone of 1800 Hz. It is assumed in the Figure 3 example that the next available channel is channel twenty-four (24) and that after channel twenty-four (24) becomes "in use" the next available channel is twenty-five (25). The first two pulses of 2000 Hz are followed by an inter-digit time of 125 or 250 milliseconds. Then, four pulses of 2000 Hz are transmitted to complete the signalling of channel twenty-four (24). An inter-channel number space time of 250 or 500 milliseconds is then transmitted. After the inter-number space time, the number twenty-four (24) is transmitted again. The central section of Figure 3 represents

0055097

the transmission of a specific mobile radio-telephone number address which ultimately results in communication being established on channel twenty-four (24). Following the establishing of communication on channel twenty-four (24), the new channel designation twenty-five (25) is transmitted. In Figures 4-7, there are, shown specific signalling sequences for land-to-mobile and mobile-to-land calls.

Referring now to Figure 4 there is shown a graphical representation of a typical example of the land-to-mobile calling sequence. It is assumed that in this example that channel one (1) is the marker/control channel and that it is free of communication. In addition, it is also assumed in this example that the next available channel for communication is channel twenty-three (23) and that after channel twenty-three (23) is placed into use, that the next available communication channel will be channel twenty-four (24). On channel one (1), the marker channel, terminal 10 transmits the number twenty-three (23) at a rate of 20 PPS thereby indicating channel twenty-three (23) is the communication channel next available for communication, ie the communications channel for mobiles to go to for placing or receiving calls. All mobile radio-telephones 14, not otherwise engaged in communication, receive on the marker channel and decode the two digit data representing channel twenty-three (23). In accordance with their internal algorithms, mobile radio-telephones 14 must decode at least two such channel identifications before they stop searching or scanning the channels to locate the marker. Between the two digits, ie the "2" and the "3" of the two digit code identifying the next available channel, there is a timing space of nominally

0055097

- 24 -

150 milliseconds. There is even a longer period of time between encoded messages. After three sequences of "23", terminal equipment 10 transmits 250 milliseconds of idle tone (2000 Hz) and then 100 milliseconds of seize tone (1800 Hz) before transmitting an address of a specific mobile radio-telephone 14. The address is of the form NPA-XXXX. Terminal 10 transmits the address at 20 PPS on the marker channel. The specific mobile radio-telephone 14 having the correct address automatically switches to channel twenty-three (23) which is the next communication channel as designated by terminal 10. All of the mobile radio telephones 14 remain on channel one (1) for a new communications channel number assignment. Following the address transmitted by terminal 10, the terminal returns to transmitting a seize tone for nominally 190 milliseconds and then transmits an idle tone for nominally 250 milliseconds before transmitting the new communications channel number assignment. In this case, the new next available channel is twenty-four (24). Terminal equipment 10 transmits the new communications channel information on idle channel one (1) for a minimum of three times before transmitting the next land-to-mobile call. All the mobile radio-telephones 14, not otherwise engaged in communication, remain locked or "camped" on the marker channel one (1) until they place or receive a call. Terminal 10 continues to change and transmit communications channel assignments and addresses (telephone numbers) as needed.

A mobile radio-telephone 14 detecting a correct address, ie its own address, switches to channel twenty-three (23), the assigned communication channel to receive its call. It begins a call- receiving signal sequence by sending 750 milliseconds of guard tone. Terminal 10 detects the guard tone and sends a ring signal in bursts of two (2) seconds on, four (4) seconds off until the ring signal is answered by the mobile radio-telephone or until a predetermined time for the ring signal has run. A mobile radio-telephone 14 answering the ring signal transmits 400 milliseconds of connect tone upon going "off hook". In this manner, channel twenty-three (23) is seized and communication takes place between the mobile radio-telephone 14 and a telephone subscriber via terminal 10. After the call has been completed, the mobile radio-telephone 14 transmits 750 milliseconds of alternating guard and disconnect tones to effect disconnection of the communication.

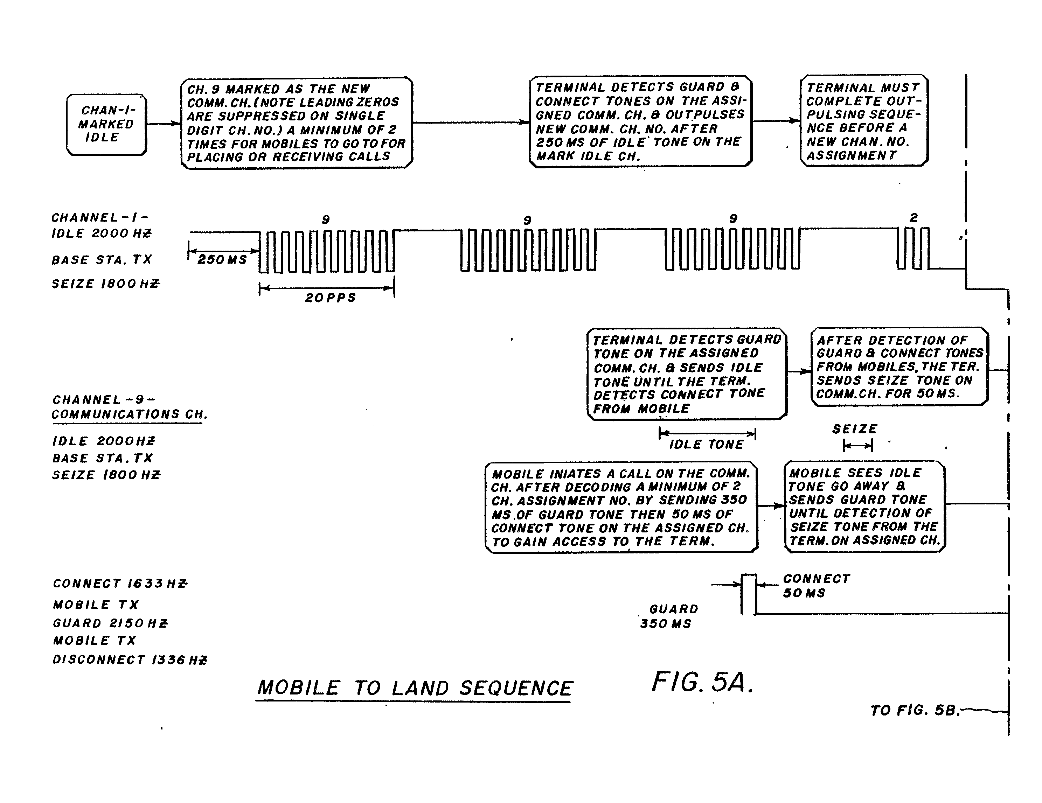

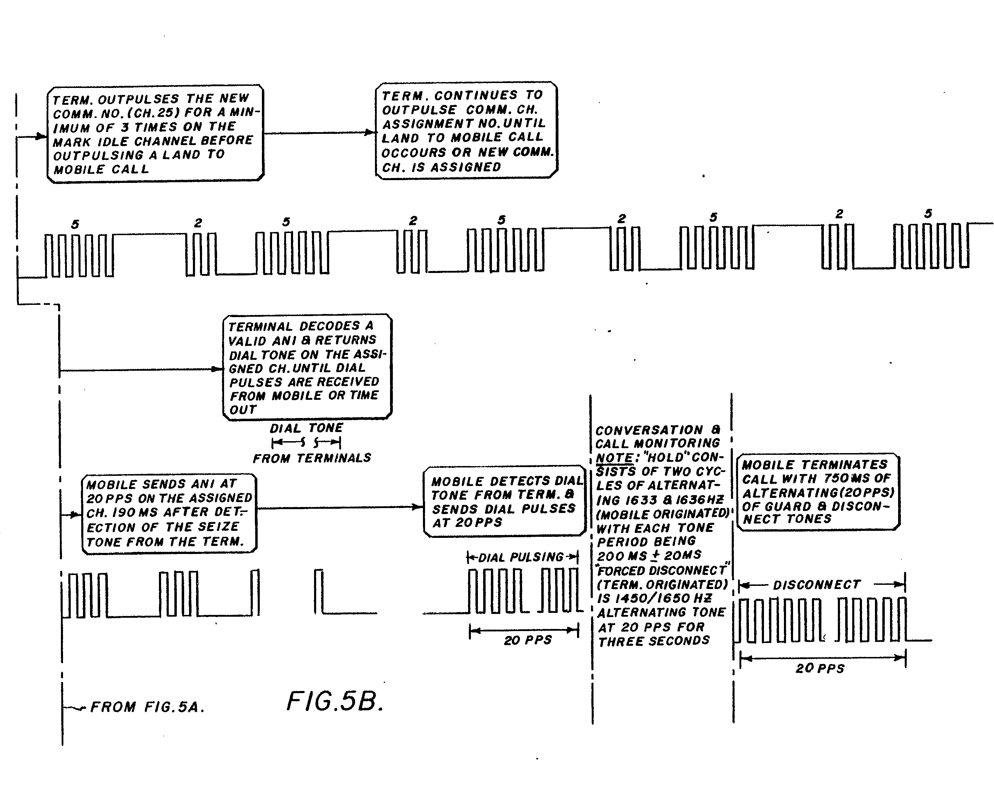

Referring now to Figure 5 there is shown a graphical representation of a typical example of the calling sequence for calls originated by a mobile radio-telephone station calling a land-based telephone subscriber. Again channel one (1) is the marker/control channel. However, in this example, channel nine (9) is marked as the next available communications channel. In the signalling sequence illustrated, leading zeros are suppressed on a single digit channel number such as channel (9). Again, the mark tone is 2000 Hz and the space tone is 1800 Hz. It is assumed that, based on an internal algorithm, channel information must be decoded three times before a mobile radio-telephone 14 can go to the designated channel to place or receive a call.

After detecting the channel nine (9) code (transmitted on channel one) two times a mobile radio-telephone 14 initiates a call on channel nine (9) by transmitting 350 milliseconds of guard tone followed by 50 milliseconds of connect tone to gain access to terminal 10. Terminal 10 detects the guard tone on channel nine (9) and sends an idle tone on that channel until the terminal detects a connect tone from the mobile radio-telephone 14. The mobile radio-telephone 14 detects the idle tone and transmits a guard tone until it detects a seize tone transmitted from the terminal on channel nine (9). Terminal 10, after detecting the guard tone and connect tone from the mobile, sends the seize tone on channel nine (9) for 50 milliseconds. After the mobile radio-telephone 14 detects the seize tone, transmitted by terminal 10, it sends its ANI code at 20 PPS on channel nine (9), 190 milliseconds after detection of the seize tone transmitted by terminal 10. Terminal 10 decodes a valid ANI code transmitted by a mobile radio-telephone 14 and returns a dial tone on the assigned channel until dial pulses are received from the mobile radio-telephone or a predetermined amount of time elapses. The mobile radio-telephone 14 detects the dial tone from the terminal and sends its dial pulses at 20 PPS. Once connection is made, a conversation takes place between the radio-telephone 14 and a telephone subscriber via terminal 10. At the end of a telephone conversation, the mobile radio-telephone terminates the call by transmitting 750 milliseconds of alternating guard and disconnect tones at 20 PPS.

While communication is taking place on channel nine (9), terminal 10 transmits a new next channel assignment on the marker channel. In this case, the next channel is twenty-five (25) and the terminal transmits on channel one (1) the coded information designating channel twenty-five (25). Terminal 10 transmits the new communication channel number twenty-five (25) for a minimum of three times on the marker channel before transmitting a land-to-mobile call address. Terminal 10 continues to transmit the communication channel assignment number twenty-five (25) until a land-to-mobile call occurs or a new communication channel is assigned by virtue of another call originated by a mobile radio-telephone 14.

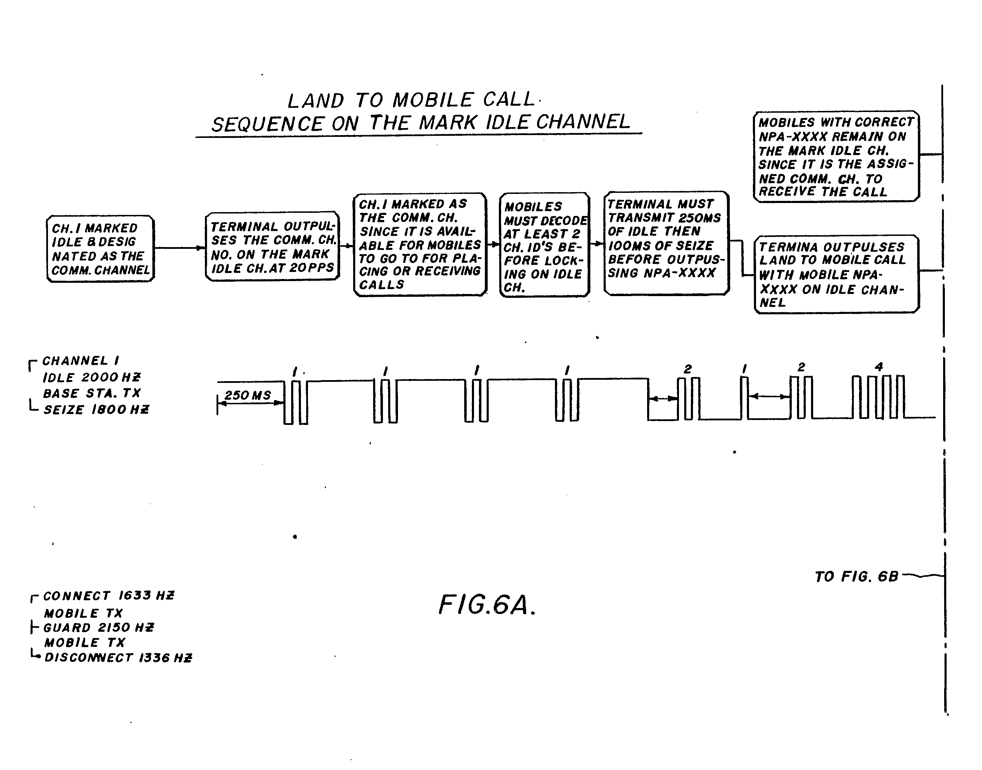

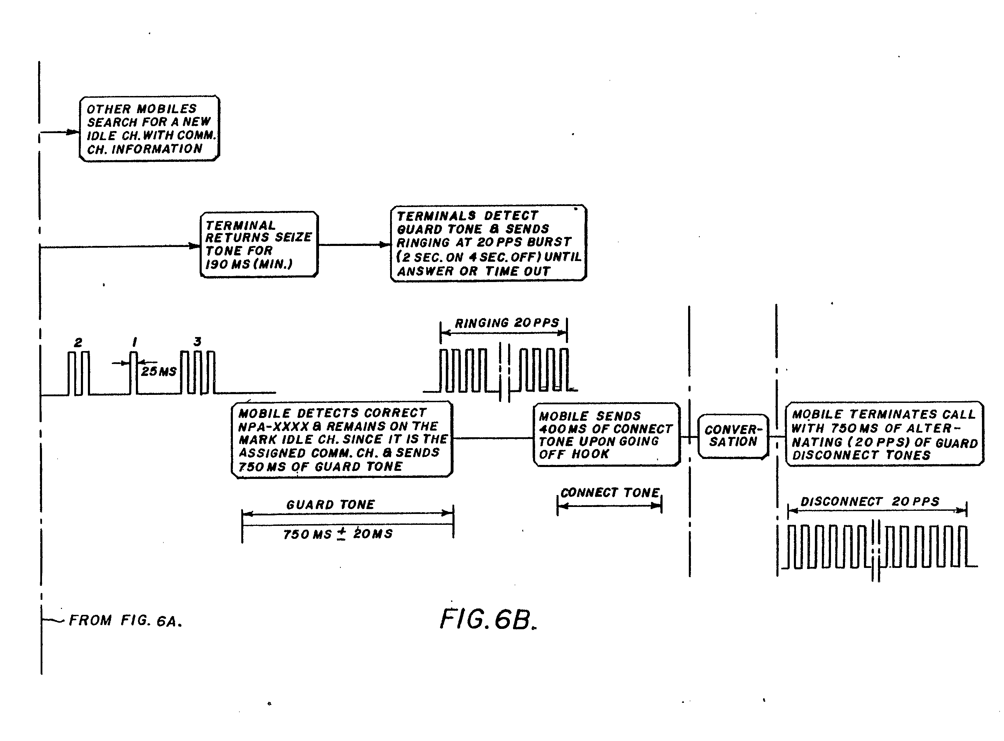

Referring now to Figure 6, there is graphically illustrated a typical example of the land-to-mobile call sequence when the marker channel is itself designated as the next available channel for communication. In this example, channel one (1) is the marker channel and is also designated as the next available communication channel. Terminal 10 transmits the communication channel number one (1) on the marker channel, also channel one (1), at 20 PPS. Channel one (1) is marked as the communication channel since it is the last channel available for mobile radio-telephones 14 to go for placing or receiving calls, ie all other channels are in use for communication. Mobile radio-telephones 14, in accordance with their internal algorithms, must decode at least two channel identifications before locking onto the marker channel. Terminal 10 transmits 250 milliseconds of idle tone then 100 milliseconds of seize tone before transmitting a mobile radio-telephone address NPA-XXXX. When a call has been originated by a land based subscriber intended for a mobile radio-telephone 14, terminal 10 transmits the land-to-mobile call with the mobile NPA-XXXX address on the idle channel (channel 1). The mobile radio-telephone 14 with the correct address NPA-XXXX remains on the marker channel since it is the assigned communications channel for receiving the call. The other mobile radio-telephones 14 begin to search for a new marker channel with the communication channel information. After transmitting the NPA-XXXX address, terminal 10 returns to transmitting a seize tone for 190 milliseconds. The mobile radio-telephone 14 having the correct NPA-XXXX address transmits a guard tone which is detected by terminal 10. Terminal 10 then transmits a ring signal at 20 PPS in bursts of two seconds on and four seconds off until the mobile radio-telephone 14 designated (addressed) answers or until a predetermined period of time has elapsed. The mobile radio-telephone 14 designates then sends 400 milliseconds of connect tone upon going off-hook. A conversation between the designated mobile radio-telephone 14 and the land-based telephone subscriber originating 'the call then takes place. The mobile radio-telephone 14 terminates the call by transmitting 750 milliseconds of alternating guard tone and disconnect tone at 20 PPS.

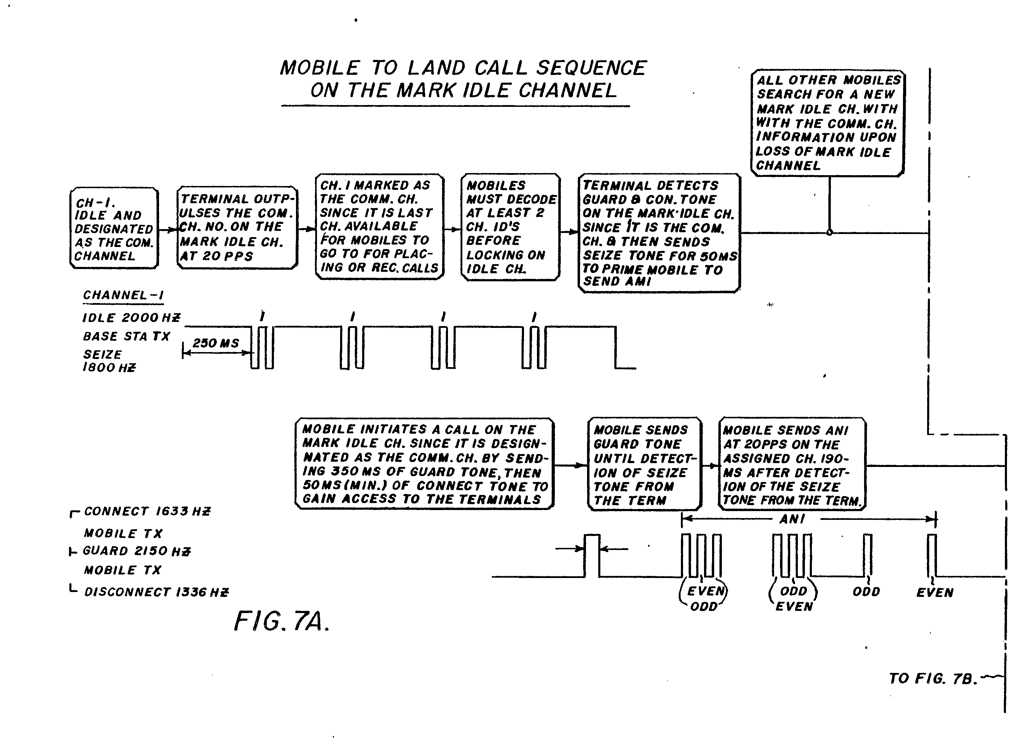

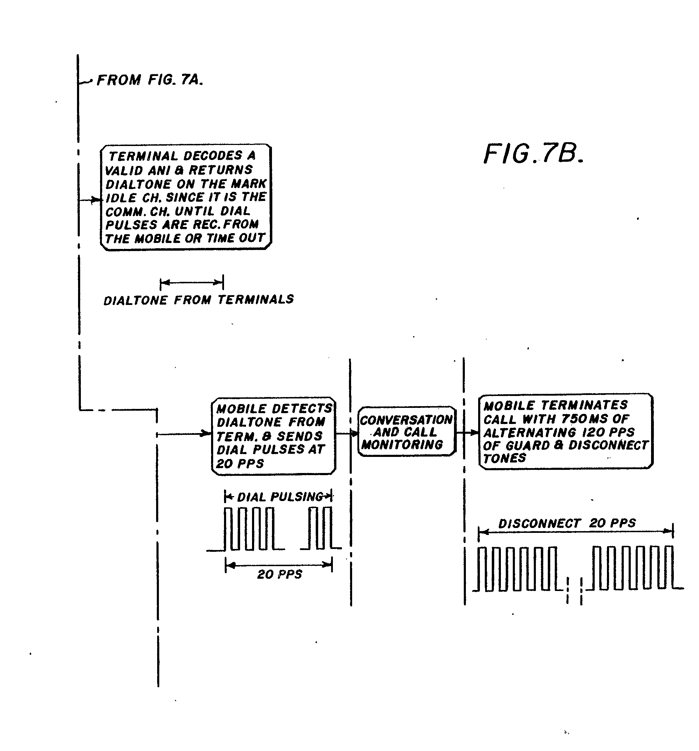

Referring now to Figure 7, there is graphically shown a typical example of the mobile-to-land call sequence on the marked idle channel. Again it is assumed that channel one (1) is the marker channel and it is also designated as the next channel available for communication. Terminal 10 transmits the communication channel information number of the marked channel at 20 PPS. Channel one (1) is marked as the next available communication channel since it is the last available channel for communications, ie the last channel available for mobile radio-telephones 14 to go to for placing or receiving a call. A mobile radio-telephone must decode at least two channels before locking onto the idle channel for communication. A mobile radio-telephone 14 initiating a call on the marker channel transmits 350 milliseconds of guard tone followed by 50 milliseconds of connect tone to gain access to the terminal. Terminal 10 detects the guard tone and detect tone on the marked channel since it is the communication channel and then sends a seize tone for 50 milliseconds. The mobile radio-telephone originating the call sends a guard tone until detection of the seize tone from terminal 10. Upon receipt of the seize tone from terminal 10, the mobile radio-telephone 14 originating the call sends its ANI code at 20 PPS on the assigned channel, ie channel one (1), 190 milliseconds after detection of the seize tone from terminal 10. All of the other mobile radio-telephones 14 begin to search for a new marker channel having communication channel information encoded thereon upon the loss of marked idle channel one (1). Upon receipt of a valid ANI from the mobile radio-telephone 14 originating the call, terminal 10 transmits a dial tone on channel one (1) since this is the communications channel. The mobile radio-telephone 14 detects the dial tone and in response thereto transmits its dial pulses. After appropriate connection, a conversation takes place. At the end of the conversation, the mobile radio-telephone 14 terminates its call by transmitting 750 milliseconds of alternating guard and disconnect tones.

There has therefore been provided a mobile radio-telephone system and method of operation that overcomes both the IM and search time problems attendant with known systems. There is no need for transmission of low-power signals ($F_O$) on unused channels and a radio-telephone can immediately switch to the correct channel for next communication when a call attempt is made or when a call is received even if it has been inadvertently camped on an "IM" marker channel, ie not the correct marker channel.

Of course, as stated above, the invention is not specifically limited to the signalling arrangements shown in the specific examples. Rather, many alternatives are possible and it is expected that such alternatives will occur to one of ordinary skill in the art having the benefit of the teachings contained herein. Therefore, such alternatives are intended to be included within the scope of claim coverage.

CLAIMS

1. A method for establishing communication between a central terminal of a radio-telephone system and a mobile radio-telephone station over one of a group of communications channels, characterised in that the central terminal transmits a channel identification signal on one of said communications channels designated as a marker channel, the channel identification signal providing an identification of the next available channel as assigned by the central terminal for communication between a mobile radio-telephone station and the central terminal; and the mobile radio-telephone station scans the communications channels to locate the marker channel by detecting the channel identification signal transmitted thereon and stores in a memory element the identity of the next available channel as specified by the channel identification signal detected during the scanning step.

2. A method according to claim 1 in which the channel identification signal on the marker channel is transmitted periodically.

3. A method according to claim 1 or claim 2 in which the mobile station comprises the first of a plurality of such stations, the said channel identification signal identifying a first next available channel and the identity of that channel being stored in a memory element of each of the mobile stations, and wherein the central terminal transmits a second channel identification signal on the marker channel identifying a second next available channel; each mobile station, not otherwise engaged in communication on a communications channel, receiving the second channel identification signal such that the memory elements of each of the mobile stations are updated to identify the second next available channel for subsequent communication between a second mobile station and the central terminal.

4. A method according to claim 1 or claim 2 in which communication on the next available channel is established by the central terminal transmitting a call signal identifying the mobile station, the mobile station receiving the call signal and transmitting on the next available channel, as designated by the information stored in its memory element, a guard signal; the central terminal receiving the guard signal and transmitting on the designated next available channel a ring signal; and the mobile station receiving the ring signal.

5. A method according to claim 4 in which the mobile station comprises a first of a plurality of such stations, and in which communication with a second of the stations is established by the central terminal transmitting a second channel identification signal identifying a second next available channel as assigned by the central terminal; each mobile station, not otherwise in communication on a communication channel, receiving the second channel identification signal and storing in a respective memory element the identity of the second next available channel as specified by a second channel identification signal.

6. A method according to claim 1 or claim 2 in which communication on the next available channel is established by the mobile station transmitting on the next available channel, as stored in its memory element, a call originate signal, and the central terminal receiving the call originate signal and transmitting a seize signal indicating that the next available channel has been dedicated for communication with the mobile station transmitting the call originate signal.

7. A method according to claim 6 in which the mobile station comprises the first of a plurality of such stations, and in which communication between the central terminal and a second of the said stations is established by the central terminal transmitting a second channel identification signal on the marker channel, a second channel identification signal identifying a second next available channel as assigned by the central terminal for communication between a mobile station and the central terminal, and each mobile station receiving the second channel identification signal and storing in a respective memory element the identity of the second next available channel as specified by the second channel identification signal.

8. A method according to claim 6 or claim 7 in which communication between the, or the first, mobile station and the central terminal is established by the mobile station receiving the seize signal and transmitting a telephone number signal, and by the central terminal receiving the telephone number signal and dialling the corresponding telephone number to establish contact with a telephone subscriber.

9. A method for establishing communication between fixed telephone stations and mobile radio-telephone stations over one of a group of communications channels via a central terminal comprising the steps of: transmitting by the central terminal a plurality of channel identification signals in succession on a marker channel comprising one of said communications channels, each channel identification signal providing an identification of the next available channel as assigned by the
central terminal for communication between a mobile
radio-telephone station and the central station;
scanning said group of communications channels designated for mobile telecommunication by each of said mobile
radio-telephone stations to locate a first one of said
marker channels by detecting the channel identification
signal on such marker channels; storing in a memory
element in each of said mobile radio-telephone stations
the identity of such next available channel as
specified by the channel identification signal detected;
communicating between one of said mobile radio-telephone
stations and its central terminal on said next available
channel; and repeatedly scanning and storing by each
remaining mobile radio-telephone station to effect
communication between any such mobile radio-telephone
station and said central terminal on a respective next
available channel.

10. A method according to claim 9 in which the central
terminal transmits the next channel identification
signal in each succession in response to each communication effected between each mobile radio-telephone
station and the central terminal on a respective next
available channel.

11. A method for establishing voice communication
between first and second stations over one of a group of
communications channels via a central terminal
comprising the steps of: transmitting by the central
terminal a plurality of channel identification signals
in succession on a marker channel comprising one of
said communications channels, each channel identification signal providing an identification of the next available channel assigned by the central terminal for communication between a first station and the central station; scanning said group of communications channels designated for communication by each of said first stations to locate a first one of said marker channels by detecting the channel identification signal on such marker channels; storing in a memory element in each of said first stations the identity of such next available channel as specified by the channel identification signal detected; communicating between one of said first stations and its central terminal on said next available channel; and repeatedly scanning and storing by each remaining first station to effect voice communication between any such first station and said central terminal on a respective next available channel.

12. A method according to claim 11 in which the central terminal transmits the next channel identification signal in each succession in response to each communication effected between each first station and the central terminal on a respective next available channel.

13. Apparatus for establishing communication between a central terminal of a radio-telephone system and a mobile radio-telephone station over one of a group of communications channels the apparatus comprising: means located at the central terminal for transmitting a channel identification signal on one of the communications channels designated as a marker channel, the channel identification signal providing an identification of the next available channel as assigned by the central terminal for communication between a mobile radio-telephone station and the central terminal; and means located at the mobile station for scanning the communications channels to locate the marker channel by
detecting the channel identification signal transmitted
thereon, and for storing the identity of the next
available channel as specified by the channel identification signal detected by the scanning means.

14. An apparatus according to claim 13 wherein the
channel identification signal is a periodic signal.

15. An apparatus according to claim 13 or 14 wherein
the channel identification signal is a digital signal.

16. An apparatus according to claim 13 or 14 wherein
the channel identification signal is a tone.

17. Apparatus according to any one of the claims 13 to
16 in which the mobile station is one of a plurality
of such stations, the channel identification signal
identifying a first next available channel and each
mobile station storing the identity of the first next
available channel, and the apparatus further comprising
means located at the central terminal for transmitting
on the marker channel a second channel identification
signal identifying a second next available channel, and
means located at each mobile station not otherwise in
communication on one of the communications channels
for receiving the second marker signal and for updating
the respective stores to identify the second next
available channel.

18. Apparatus according to any one of the claims 13
to 16 further comprising means located at the central
terminal for transmitting the call signal identifying
the mobile station, means located at the mobile station
for receiving the call signal and for transmitting on the next available channel, as designated by the stored
information at the station, a guard tone; means located
at the central terminal for receiving the guard tone
and for transmitting in response thereto a ring signal,
and means located at the mobile station for receiving
the ring signal.

19. Apparatus according to claim 17 further comprising
means located at the central terminal for transmitting
a call signal identifying a first of the mobile
stations, means located at the first mobile station for
receiving the call signal and for transmitting in
response thereto on the next available channel, as
designated by the information stored at the station,
a guard tone; means located at the central terminal for
receiving the guard signal and for transmitting in response
thereto on the first next available channel a ring signal,
and means located at the first mobile station for
receiving the ring signal.

20. Apparatus according to any one of the claims 13 to
16 further comprising means located at the mobile station
for transmitting on the next available channel, as stored
at the station, a call originate signal, and means
located at the central terminal for receiving the call
originate signal and for transmitting in response
thereto a seize signal indicating that the next available channel has been dedicated for communication with
the mobile station transmitting the call originate
signal.

21. Apparatus according to claim 17 further comprising
means located at a first of the mobile stations for
transmitting on the first next available channel, as
stored at the station, a call originate signal, and

- 8 -                                    **0055097**

means located at the central terminal for receiving the
call originate   signal and for transmitting in
response thereto a seize signal indicating that the
first next available channel has been dedicated for
communication with the first mobile station transmitting the call originate signal whereby communication
between the first mobile station and the central terminal is established on the dedicated communications
channel and communication between a second mobile
station and the central terminal is established on the
second next available channel.

22.   Apparatus for establishing communication between
a central terminal of a communication system and first
stations over one of a group of communications channels
comprising: means located at the central terminal for
transmitting a first channel identification signal on
one of the communications channels designated as a
marker channel, the first channel identification signal
including an identification of a first next available
channel as assigned by the central terminal for communication between a first station and the central terminal;
means located at each of the first stations for
scanning the communications channels to locate the
marker channel by detecting the first channel identification signal on the marker channel and for storing in
a memory element the identity of the first next available
channel as specified by the channel identification
signal detected; means located at one of said first
stations for transmitting on the first next available
channel, as stored in its memory element, a call originate
signal; means located at the central terminal for
receiving the call originate signal and transmitting in
response thereto a seize signal indicating that the
first next available channel has been dedicated for
communication with the said one of the first stations
transmitting the call originate signal;  means for establishing communication between the said one of the first stations and the central terminal on the dedicated communications channel; further means located at the central terminal for transmitting a second channel identification signal on the marker channel, the second channel identification signal identifying a second next available channel as assigned by the central terminal for communication between another first station and the central terminal; said first stations having means for releasing the second channel identification signal; further means located at each of the first stations for storing the identity of the second next available channel as specified by the second channel identification signal; and means for establishing communication between said another first station and the central terminal on the second next available channel.

FIG.I.

TELEPHONE (LAND) NETWORK

TERMINAL 10

TRANSMITTER/RECEIVERS

CHANNEL #1 — 12-1
CHANNEL #2 — 12-2
CHANNEL #3
CHANNEL #4
CHANNEL #5
CHANNEL #6
CHANNEL #7
CHANNEL #8
CHANNEL N — 12-N

MOBILE STATIONS

14-A  14-B  14-C  14-D  14-E  14-F  14-G  14-H  14XXX

MARKER/CONTROL CHANNEL CONTAINING NEXT AVAILABLE VOICE CHANNEL.

MOBILE 14-C MOVES TO CHANNEL #6 IN RESPONSE TO A LAND TO MOBILE CALL RECEIVED ON THE MARKER/CONTROL CHANNEL.

MOBILE F MOVES TO CHANNEL #7 DESIGNATED BY MARKER/CONTROL CHANNEL TO PLACE A MOBILE TO LAND CALL.

MOBILE H SEARCHES FOR AND RETURNS TO MARKER/CONTROL CHANNEL UPON COMPLETION OF CALL.

MOBILE C  ~30
MOBILE F  ~32
MOBILE H  ~34

1/10

0055097

FIG. 2.

2000 Hz

2    4    2    4    2    5    2    5

1800 Hz

LAND TO MOBILE
TELEPHONE NUMBER

FIG. 3.

# LAND TO MOBILE CALL SEQUENCE

| CHAN.#1 MARKED IDLE | → | TERMINAL OUTPULSES THE COMMUNICATIONS CHANNEL NO. ON THE MARK IDLE CHAN. AT 20 PPS | → | CH. 28 MARKED AS THE COMMUNICATION CH. FOR MOBILES TO GO TO FOR PLACING OR RECEIVING CALLS | → | MOBILES MUST DECODE AT LEAST 2 CHAN. ID'S BEFORE THEY STOP SEARCHING | → | TERMINAL MUST XMIT 250 MS OF IDLE THEN 100 MS OF SEIZE BEFORE OUTPULSING NPA-XXXX | → | TERMINAL OUTPULSES LAND TO MOBILE CALL WITH MOBILE NPA-XXXX ON IDLE CHANNEL AT 20 PPS |

MOBILE WITH CORRECT NPA-XXXX AUTOMATICALLY SWITCHES TO ASSIGNED COMMUNICATIONS CHANNEL TO RECEIVE THE CALL

CHANNEL I

IDLE 2000 HZ
BASE STA. TX
SEIZE 1800 HZ

250 MS   150 MS   100 MS   25 MS

2   3   2   3   2   3   2   1   2

CHANNEL 23

COMMUNICATION CH.

IDLE 2000 HZ
BASE STA. TX
SEIZE 1800 HZ

CONNECT 1633 HZ
MOBILE TX
GUARD 2150 HZ
MOBILE TX
DISCONNECT 1336 HZ

## FIG. 4A.

TO   TO FIG. 4B.

OTHER MOBILES RE-MAIN ON IDLE CHAN. FOR NEW COMMUNIC-ATIONS CHANNEL NO. ASSIGNMENT

TERMINAL RETURNS SEIZE FOR 190 MS THEN IDLE FOR 250MS AFTER OUTPULSING NPA-XXXX BEFORE OUTPULSING COMM. CH. NO.

TERMINAL OUTPULSES THE NEW COMM.CH.NO. ON THE MARK IDLE CH. FOR A MINIMUM OF 3 TIMES BEFORE OUT-PULSING THE NEXT LAND MOBILE CALL

MOBILES REMAIN LOCK-ED ON MARK IDLE CH. UNTIL THEY PLACE A MOBILE TO LAND CALL OR RECIEVE A LAND TO MOBILE CALL

TERMINAL CONTINUES TO OUTPUT COMMUNIC-ATIONS CH. ASSIGNMENT NO. UNTIL LAND TO MOB-ILE CALL OCCOURS OR NEW COMM. CH. NO. IS ALLOWED

4   2   1   3   190 MS   250 MS   2   4   2   4   2   4

ADDRESS (TELEPHONE NO.) OF A MOBILE RADIO-TELEPHONE -14-

TERMINA DETECTS GUARD TONE & SENDS RINGING AT 20PPS BURST (25 SEC. ON 4 SEC. OFF) UNTIL ANSWER OR TIME OUT

RINGING 20 PPS

FIG. 4B.

MOBILE DETECTS CORRECT NPA-XXXX SWITCHES TO ASSIGNED COMMUNICATION CHANNEL & SENDS 750 MS OF GUARD TIME

MOBILE SENDS ADD MS OF CONN-ECT TONE UPON GOING OFF HOOK

PICK-UP HAND SET

MOBILE TERMINATES CALL WITH 750 MS OF ALTERNATING (20PPS) OF GUARD & DISCON-NECT TONES

DISCONNECT

FROM FIG. 4A.

0055097

MOBILE TO LAND SEQUENCE          FIG. 5A.

TO FIG. 5B.

TERM. OUTPULSES THE NEW COMM. NO. (CH.25) FOR A MINIMUM OF 3 TIMES ON THE MARK IDLE CHANNEL BEFORE OUTPULSING A LAND TO MOBILE CALL

TERM. CONTINUES TO OUTPULSE COMM. CH. ASSIGNMENT NO. UNTIL LAND TO MOBILE CALL OCCOURS OR NEW COMM. CH. IS ASSIGNED

TERMINAL DECODES A VALID ANI & RETURNS DIAL TONE ON THE ASSIGNED CH. UNTIL DIAL PULSES ARE RECEIVED FROM MOBILE OR TIME OUT

DIAL TONE
FROM TERMINALS

CONVERSATION & CALL MONITORING
NOTE: "HOLD" CONSISTS OF TWO CYCLES OF ALTERNATING 1633 & 1636 HZ (MOBILE ORIGINATED) WITH EACH TONE PERIOD BEING 200 MS ± 20 MS "FORCED DISCONNECT" (TERM. ORIGINATED) IS 1450/1650 HZ ALTERNATING TONE AT 20 PPS FOR THREE SECONDS

MOBILE TERMINATES CALL WITH 750 MS OF ALTERNATING (20 PPS) OF GUARD & DISCONNECT TONES

MOBILE SENDS ANI AT 20 PPS ON THE ASSIGNED CH. 190 MS AFTER DETECTION OF THE SEIZE TONE FROM THE TERM.

MOBILE DETECTS DIAL TONE FROM TERM. & SENDS DIAL PULSES AT 20 PPS

DIAL PULSING
20 PPS

DISCONNECT
20 PPS

FROM FIG.5A.

*FIG.5B.*

LAND TO MOBILE CALL
SEQUENCE ON THE MARK IDLE CHANNEL

CH. I MARKED IDLE & DESIGNATED AS THE COMM. CHANNEL

TERMINAL OUTPULSES THE COMM. CH. NO. ON THE MARK IDLE CH. AT 20 PPS

CH. I MARKED AS THE COMM. CH. SINCE IT IS AVAILABLE FOR MOBILES TO GO TO FOR PLACING OR RECEIVING CALLS

MOBILES MUST DECODE AT LEAST 2 CH. ID'S BEFORE LOCKING ON IDLE CH.

TERMINAL MUST TRANSMIT 250MS OF IDLE THEN 100MS OF SEIZE BEFORE OUTPUSSING NPA-XXXX

MOBILES WITH CORRECT NPA-XXXX REMAIN ON THE MARK IDLE CH. SINCE IT IS THE ASSIGNED COMM. CH. TO RECEIVE THE CALL

TERMINA OUTPULSES LAND TO MOBILE CALL WITH MOBILE NPA-XXXX ON IDLE CHANNEL

CHANNEL I
IDLE 2000 HZ
BASE STA. TX
SEIZE 1800 HZ

250 MS

2   1   2   4

CONNECT 1633 HZ
MOBILE TX
GUARD 2150 HZ
MOBILE TX
DISCONNECT 1336 HZ

FIG.6A.

TO FIG. 6B

OTHER MOBILES
SEARCH FOR A NEW
IDLE CH. WITH COMM.
CH. INFORMATION

TERMINAL
RETURNS SEIZE
TONE FOR
190 MS (MIN.)

TERMINALS DETECT
GUARD TONE & SENDS
RINGING AT 20 PPS BURST
(2 SEC. ON 4 SEC. OFF) UNTIL
ANSWER OR TIME OUT

RINGING 20 PPS

2   1   3

25 MS

MOBILE DETECTS CORRECT
NPA-XXXX & REMAINS ON THE
MARK IDLE CH. SINCE IT IS THE
ASSIGNED COMM. CH. & SENDS
750 MS OF GUARD TONE

MOBILE SENDS
400 MS OF CONNECT
TONE UPON GOING
OFF HOOK

CONVER-
SATION

MOBILE TERMINATES CALL
WITH 750 MS OF ALTER-
NATING (20 PPS) OF GUARD
DISCONNECT TONES

GUARD TONE

750 MS ± 20 MS

CONNECT TONE

DISCONNECT 20 PPS

FROM FIG. 6A.

FIG. 6B.

8/10

0055097

## MOBILE TO LAND CALL SEQUENCE
## ON THE MARK IDLE CHANNEL

**FIG. 7A.**

FROM FIG. 7A.

FIG.7B.

TERMINAL DECODES A
VALID ANI & RETURNS
DIALTONE ON THE MARK
IDLE CH. SINCE IT IS THE
COMM. CH. UNTIL DIAL
PULSES ARE REC. FROM
THE MOBILE OR TIME OUT

DIALTONE FROM TERMINALS

MOBILE DETECTS
DIALTONE FROM
TERM. & SENDS
DIAL PULSES AT
20 PPS

CONVERSATION
AND CALL
MONITORING

MOBILE TERMINATES
CALL WITH 750 MS OF
ALTERNATING 120 PPS
OF GUARD & DISCONNECT
TONES

DIAL PULSING

20 PPS

DISCONNECT 20 PPS

European Patent Office

EUROPEAN SEARCH REPORT

0055097
Application number

EP 81 30 5955

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| X | <u>US - A - 4 228 319</u> (DE JAGER)<br><br>* Column 5, line 38 to column 12, line 48; figures 2 to 5 *<br><br>--- | 1-3,<br>6-17<br>20-22 | H 04 Q   7/04 |
| X | <u>DE - A - 2 537 683</u> (LICENTIA)<br><br>* Page 7, line 9 to page 8, line 9; page 15, line 6 to page 16, line 10; page 17, line 13 to page 20, line 5; page 22, line 12 to page 25, line 7; page 27, line 21 to page 29, line 5; claims 1,5,10,18 and 19; figures 7 to 9 *<br><br>---- | 1-15,<br>17-22 | |

TECHNICAL FIELDS SEARCHED (Int.Cl. 3)

H 04 Q   7/04

CATEGORY OF CITED DOCUMENTS

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| The Hague | 22-03-1982 | WANZEELE |

EPO Form 1503.1   06.78